# EUROPÄISCHE PATENTSCHRIFT

(11) **EP 3 097 293 B1**
(45) Veröffentlichungstag und Bekanntmachung des Hinweises auf die Patenterteilung: **12.12.2018**
(21) Anmeldenummer: 15708484.9
(22) Anmeldetag: 03.03.2015
(51) Int. Cl.: F02C 9/16, F02C 9/28

(54) **VARIABLE GRENZLEISTUNGSREGELUNG FÜR GASTURBINEN**
VARIABLE POWER LIMIT CONTROL FOR GAS TURBINES
RÉGULATION DE PUISSANCE LIMITE VARIABLE POUR TURBINES À GAZ

(30) Priorität: 20.03.2014 EP 14160875
(43) Veröffentlichungstag der Anmeldung: 30.11.2016
(73) Patentinhaber: Siemens Aktiengesellschaft, 80333 München (DE)
(72) Erfinder: BEILER, Jan-Dirk, 45473 Mülheim a.d. Ruhr (DE); GAMM, Hans-Georg, 46535 Dinslaken (DE); KERSTIENS, Thomas, 48149 Münster (DE); LARSON, Marco, 45476 Mülheim (DE); MÜHLHÖLZER, Rosa-Eos, 12159 Berlin (DE); PURPS, Florian, 68259 Mannheim (DE); SCHNEIDER, Oliver, 46487 Wesel (DE); SCHÄFER, Marc, Charlotte, NC 28273 (US); KREUTZER, Philipp, 48249 Dülmen (DE); REINBERG, Marc, 47829 Krefeld (DE); STAPPER, Martin, 47475 Kamp-Lintfort (DE)
(86) Internationale Anmeldenummer: PCT/EP2015/054420
(87) Internationale Veröffentlichungsnummer: WO 2015/139949

(56) Entgegenhaltungen:
- EP-A2- 1 085 267
- EP-A2- 2 738 370
- US-A- 6 164 057
- US-A1- 2011 210 555
- US-A1- 2013 227 954
- US-B1- 6 718 771

## Beschreibung

Die Erfindung betrifft ein Verfahren zum Betreiben einer Gasturbinenanlage und eine nach dem Verfahren betriebene Gasturbinenanlage.

Die Grenzleistung einer Gasturbine ist die Leistung, bei der eine Gasturbine maximal betrieben werden darf, und wird durch die mechanische Integrität der einzelnen Bauteile der Gasturbine bestimmt. Das Bauteil, das zuerst die Grenze seiner mechanischen Belastbarkeit erreicht, ist dabei bestimmend für die Grenzleistung der Gasturbine. Typischerweise handelt es sich bei diesen Bauteilen um die in der Hauptströmungsrichtung hinteren Turbinenschaufeln, die aufgrund ihres Radius und der damit einhergehenden größeren auf die Turbinenschaufeln wirkenden Zentrifugalkräfte am stärksten belastet werden.

Um eine möglichst hohe Energieausbeute der Gasturbine zu erreichen, wird diese möglichst nahe an der Grenzleistung betrieben. Die momentane Leistung der Gasturbine wird üblicherweise an den elektrischen Ausgängen eines von der Gasturbine angetriebenen elektrischen Generators der Gasturbinenanlage durch Messen der Ströme, Spannungen und gegebenenfalls Phasenwinkel indirekt bestimmt, da angenommen wird, dass die momentane Ausgangsleistung des elektrischen Generators direkt von der momentanen Leistung abhängt.

Die momentane Leistung der Gasturbine kann aufgrund von Schwankungen von Betriebsparametern kurzfristig die für die Gasturbine festgelegte Grenzleistung erreichen oder überschreiten. In diesem Fall wird die Gasturbine gedrosselt, um ihre mechanische Integrität zu gewährleisten.

Weiter ist es auch bekannt, etwa aus der US 2013/227954 A1 oder der US 6718771 B1, dass der Grenzleistungswert variable in Abhängigkeit von der Umgebungstemperatur bestimmt werden kann, wobei bei fallenden Temperaturen der Grenzleistungswert ansteigt. Problematisch ist jedoch bei einer solchen Abhängigkeit, dass die Grenzleistungsanpassung für sich ändernde Umgebungsbedingungen nur einschränkend bestimmt werden kann.

Die Erfindung macht es sich zur Aufgabe, ein verbessertes Verfahren für den Betrieb einer Gasturbinenanlage bereitzustellen, insbesondere eines, welches auch an weitere sich ändernde Umgebungsbedingungen angepasst werden kann.

Die Erfindung führt daher ein Verfahren zum Betreiben einer Gasturbinenanlage mit einer Gasturbine und einem von der Gasturbine angetriebenen elektrischen Generator ein. Das Verfahren weist wenigstens die folgenden Schritte auf:
- Erfassen einer Momentanleistung der Gasturbinenanlage;
- Vergleichen der erfassten Momentanleistung mit einem Leistungsgrenzwert; und
- Begrenzen der Momentanleistung, wenn das Vergleichen ergibt, dass die erfasste Momentanleistung den Leistungsgrenzwert erreicht oder überschreitet. Erfindungsgemäß sind dabei ein Schritt des Erfassens wenigstens eines Betriebsparameters der Gasturbinenanlage und ein Schritt des Bestimmens des Leistungsgrenzwertes in Abhängigkeit des wenigstens einen erfassten Betriebsparameters vorgesehen.

Erfindungsgemäß soll zudem der Leistungsgrenzwert erhöht werden, wenn sich der Umgebungsdruck erhöht, beziehungsweise der Leistungsgrenzwert reduziert werden, wenn der Umgebungsdruck sinkt. Die Änderungen des Umgebungsdrucks wirken sich wie die der Umgebungstemperatur auf den Massenstrom des Verdichters aus. Es ist dabei auch möglich, den Massenstrom des Verdichters anhand von Messungen und/oder Berechnungen, gegebenenfalls in Abhängigkeit der Umgebungstemperatur und des Umgebungsdrucks, als Betriebsparameter der Gasturbine zu bestimmen und den Grenzleistungswert in Abhängigkeit von diesem Massenstrom zu wählen. Hierfür können gegebenenfalls weitere Betriebsparameter wie beispielsweise der Verdichteraustrittsdruck oder die Verdichteraustrittstemperatur berücksichtigt werden.

Die Erfindung besitzt zudem den Vorteil, dass eine höhere Energieausbeute erreicht wird, indem eine variable Grenzleistung für die Regelung der Gasturbinenanlage verwendet wird. Die Erfindung beruht dabei auf der Einsicht und schließt diese mit ein, dass die Begrenzung durch die am Generator gemessene elektrische Ausgangsleistung nicht für jeden Betriebszustand der Gasturbinenanlage direkt auf eine kritische momentane Belastung der Gasturbine, die durch die strömungstechnischen und rotationsmechanischen Gegebenheiten in der Gasturbine bestimmt wird, schließen lässt. So können Veränderungen der Betriebsparameter der Gasturbine eine höhere momentane Leistung der Gasturbine zulassen, die unter anderen Betriebsbedingungen eine unzulässig hohe Belastung darstellen würden. Ein fester Leistungsgrenzwert, der für alle Betriebszustände der Gasturbine gleichermaßen Anwendung findet, muss so konservativ gewählt sein, dass er für alle Betriebszustände die mechanische Integrität der Gasturbine sicherstellt. Die erfindungsgemäße Verwendung eines variablen Leistungsgrenzwertes, der in Abhängigkeit der zu einem gegebenen Zeitpunkt tatsächlich vorliegenden Betriebsparameter bestimmt wird, erlaubt jedoch in bestimmten Situationen, die momentane Leistung der Gasturbinenanlage über einen solchen konservativ gewählten Leistungsgrenzwert hinauszugehen, wodurch die Gesamtenergieausbeute und damit die Wirtschaftlichkeit der Gasturbinenanlage steigt. Insbesondere ist eine Anpassung des Leistungsgrenzwertes an weitere variierende Umgebungsbedingungen vorgesehen, so dass eine genauere bzw. flexiblere Anpassung erfolgen kann.

Bevorzugt umfasst der wenigstens eine Betriebsparameter der Gasturbinenanlage weiterhin wenigstens einen ausgewählten Betriebsparameter von einer Umgebungstemperatur, einer Gesamtlaufzeit der Gasturbine oder einer Gesamtenergieausgabe der Gasturbinenanlage. Bei diesen Betriebsparametern handelt es sich um solche, die unmittelbar die momentane Leistung der Gasturbine beeinflussen (Umgebungstemperatur) und eine Wirkung auf die mechanische Belastungsgrenze der Gasturbine haben (Gesamtlaufzeit und Gesamtenergieausgabe). Diese Betriebsparameter können gegebenenfalls durch Sensoren wie Thermoelemente oder Druckaufnehmer bestimmt werden. Alternativ können diese Betriebsparameter aber auch anstelle des Betriebsparameters des Umgebungsdruckes zur Bestimmung eines Leistungsgrenzwertes heran gezogen werden.

Der Leistungsgrenzwert wird verringert, wenn die Gesamtlaufzeit der Gasturbine einen vorherbestimmten Schwellwert überschreitet. Diese Ausführungsform der Erfindung trägt der Tatsache Rechnung, dass sich die Belastung relativ zu der gemessenen Leistung am Generator mit zunehmender Alterung erhöht. Dementsprechend können bei ansonsten baugleichen Gasturbinen mit unterschiedlichen summierten Laufzeiten für diejenige mit den geringeren Laufleistungen höhere Leistungsgrenzwerte gewählt werden als für die andere. Hierbei ändert sich weniger die Belastbarkeit der Bauteile als viel mehr die Leistungsausbeute bei gleicher mechanischer Belastung. Die Alterung kann entweder in Form einer flottenspezifischen Charakteristik vorgegeben werden oder in Form einer Berechnung aus Betriebsparametern. Dies erlaubt es, geeignete Leistungsgrenzwerte auch nach einer Reparatur oder Überarbeitung der Gasturbine zu wählen, bei denen einzelne Bauteile der Gasturbine ausgetauscht oder repariert wurden.

Die Momentanleistung der Gasturbinenanlage kann bestimmt werden, indem eine elektrische Ausgabeleistung des elektrischen Generators der Gasturbinenanlage bestimmt wird. Alternativ ist es aber auch möglich, die Momentanleistung der Gasturbinenanlage zu bestimmen, indem eine momentane Turbinenleistung der Gasturbine der Gasturbinenanlage bestimmt wird. Die Bestimmung der elektrischen Ausgabeleistung des Generators der Gasturbinenanlage ist einfach durchzuführen und bei vielen bestehenden Gasturbinenanlagen ohne bauliche Veränderung möglich. Die Verwendung der momentanen Turbinenleistung besitzt hingegen den Vorteil, dass die tatsächlich auf die einzelnen Bauteile der Gasturbine wirkenden Kräfte und Belastungen direkt abgeleitet werden können, so dass geeignete Leistungsgrenzwerte unmittelbar folgen. Die Regelung kann somit direkt auf einer neuen Regelgröße aufsetzen, nämlich der momentanen Turbinenleistung der Gasturbine, die durch eine mathematische Modellierung auf der Grundlage der messtechnisch bestimmten und/oder im System bekannten Betriebsbedingungen bestimmt werden. Dabei kann die momentane Turbinenleistung auch unter Betrachtung der jeweiligen Leistungen der verschiedenen Turbinenstufen erfolgen, die auch für sich als Regelgröße in die Regelung eingehen können.

Die Momentanleistung kann beispielsweise begrenzt werden, indem ein Verdichtermassenstrom eines Verdichters der Gasturbine begrenzt wird. Dies kann durch unterschiedliche Maßnahmen wie beispielsweise ein Verstellen einer Reihe variabler Leitschaufeln des Verdichters oder bei Verwendung eines Wet-Compression-Verfahrens durch eine Verringerung der in den Verdichter eingespritzten Wassermenge erreicht werden.

Ein zweiter Erfindungsaspekt betrifft eine Gasturbinenanlage mit einer Gasturbine, einem mit der Gasturbine verbundenen elektrischen Generator und einer mit der Gasturbine und dem elektrischen Generator verbundenen Steuereinheit, die ausgebildet ist, das erfindungsgemäße Verfahren auszuführen.

Außerdem betrifft die Erfindung einen computerlesbaren Datenträger mit einem computerausführbaren Programmcode, der, von einer Steuereinheit einer solchen Gasturbinenanlage ausgeführt, das erfindungsgemäße Verfahren ausführt. Bestehende Installationen von Gasturbinenanlagen können durch eine Aktualisierung ihrer Steuerungssoftware so modifiziert werden, dass sie Verwendung von der Erfindung machen.

Die Erfindung wird nachfolgend anhand von Abbildungen von Ausführungsbeispielen näher erläutert. Es zeigen:
- Figur 1: eine erfindungsgemäße Gasturbinenanlage;
- Figur 2: ein Beispiel einer Gasturbine in einem Längsteilschnitt;
- Figur 3: ein erstes Diagramm, das die Leistung einer Gasturbine als Funktion der Temperatur erläutert, wie es etwa aus dem Stand der Technik bekannt ist; und
- Figur 4: ein zweites Diagramm, das die Leistung einer Gasturbine wiederum als Funktion der Temperatur erläutert.

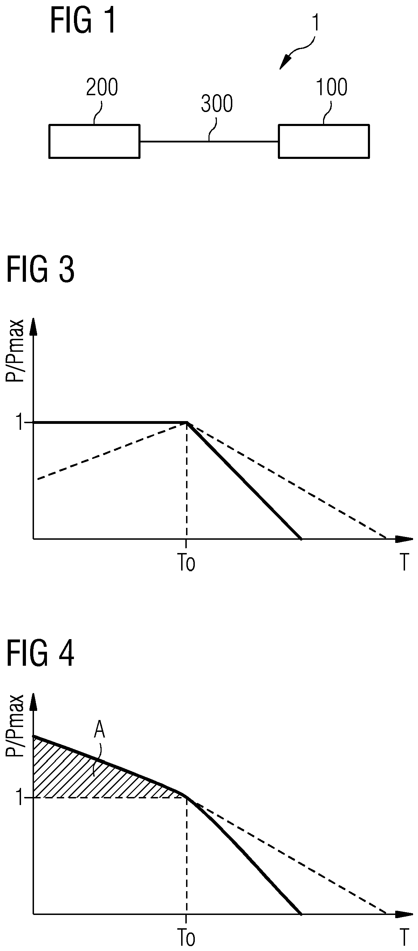

Figur 1 zeigt eine erfindungsgemäße Gasturbinenanlage 1, die eine Gasturbine 100 umfasst, die über eine Welle 300 mit einem elektrischen Generator 200 verbunden ist und diesen antreibt. Der elektrische Generator 200 wandelt die von der Gasturbine 100 bereitgestellte Rotationsenergie in elektrische Energie um und gibt diese über elektrische Anschlüsse aus.

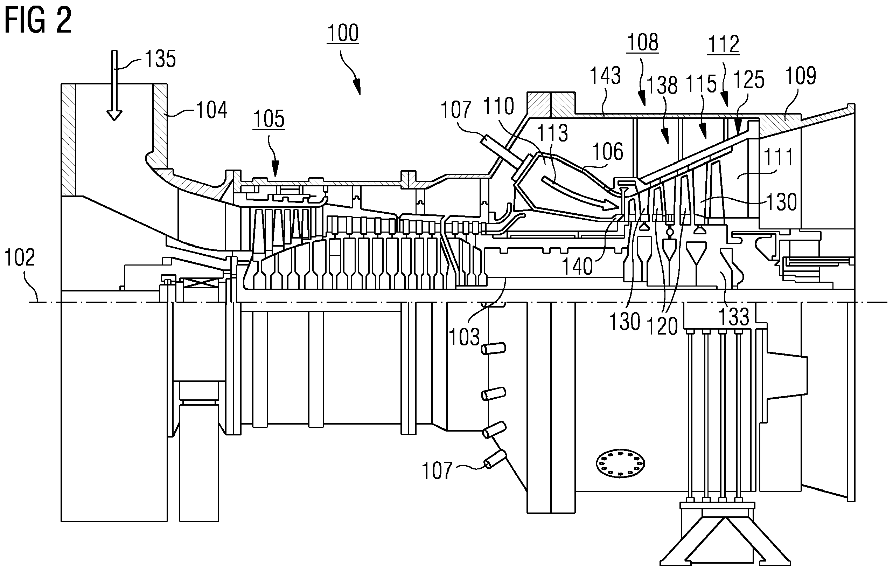

Die Figur 2 zeigt ein Ausführungsbeispiel einer Gasturbine, wie sie in einer erfindungsgemäßen Gasturbinenanlage Verwendung finden kann, in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Von der Brennkammer 110 entspannt das heiße Gas in einem ringförmigen Heißgaskanal 111 der Turbine. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Laufschaufeln 120 stellen üblicherweise diejenigen Bauteile mit der größten Belastung dar, wobei die Belastung der Laufschaufeln 120 in Strömungsrichtung des Arbeitsmediums 113 aufgrund der ansteigenden Radien der Vorrichtung zunimmt. Diese Bauteile bestimmen daher maßgeblich den Leistungsgrenzwert.

Die Leitschaufeln 130 sind an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein elektrischer Generator (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Figur 3 zeigt ein erstes Diagramm, das die Leistung einer Gasturbine als Funktion der Temperatur erläutert, wie es etwa aus dem Stand der Technik bekannt ist. Dabei sind die elektrische Ausgabeleistung der Gasturbinenanlage als durchgezogene Linie und die Turbinenleistung der Gasturbine als gestrichelte Linie über der Umgebungstemperatur T aufgetragen, wobei die beiden genannten Leistungen auf ihren jeweiligen Grenzleistungswert normiert sind.

Die Gasturbinenanlage wird im Beispiel der Figur 3 gemäß der herkömmlichen Verfahrensweise betrieben. Es zeigt sich, dass für hohe Temperaturen aufgrund der herabgesetzten Dichte der Umgebungsluft und des dadurch reduzierten Massenstromes des Verdichters der Gasturbine die elektrische Ausgabeleistung der Gasturbinenanlage unter der gesetzten Grenze bleibt und mit zunehmender Umgebungstemperatur weiter abnimmt. Die Turbinenleistung der Gasturbine, die die tatsächliche Belastung des Turbinenabschnitts der Gasturbine bestimmt, zeigt ein entsprechendes Verhalten. Mit sinkenden Umgebungstemperaturen wird die vom Verdichter angesaugte Luft dichter, so dass der Gasturbine vom Verdichter ein größerer Massenstrom zur Verfügung gestellt werden kann, der eine entsprechend steigende Turbinenleistung und auch elektrische Ausgabeleistung bedingt. Erreicht die elektrische Ausgabeleistung einen vorherbestimmten Maximalwert, was im gezeigten Beispiel bei einer Umgebungstemperatur T₀ geschieht, wird sie begrenzt und möglichst nah an dem Maximalwert gehalten, was durch Steuereingriffe am Verdichter geschehen kann. Bei der Umgebungstemperatur T₀ erreicht auch die Turbinenleistung der Gasturbine ihren maximal zulässigen Wert. Sinkt die Umgebungstemperatur weiter, wird die elektrische Ausgabeleistung konstant gehalten, allerdings kann die Gasturbine diese elektrische Ausgabeleistung bei einer immer geringeren Turbinenleistung der Gasturbine erreichen. Dies erklärt sich dadurch, dass die von dem Turbinenabschnitt aus dem heißen Gasstrom des verbrennenden Brennstoffs entnommene Rotationsenergie wieder teilweise an den Verdichter abgibt, der die Verbrennungsluft verdichtet. Da wegen der sinkenden Temperaturen und einem sinkenden Verdichtermassenstrom weniger Verdichterarbeit aufgewendet werden muss, kann ein entsprechend größerer Teil der Rotationsenergie im elektrischen Generator in elektrische Energie umgewandelt werden. Indem aber die elektrische Ausgabeleistung des Generators nun konstant gehalten wird, kann die Gasturbine bei sinkenden Umgebungstemperaturen diese elektrische Ausgabeleistung mit einer sinkenden Turbinenleistung bereitstellen. Dementsprechend fällt auch die Belastung der Gasturbine mit niedrigen Temperaturen unter das maximal zulässige Maß.

Figur 4 zeigt ein zweites Diagramm, das die Leistung einer Gasturbine als Funktion der Temperatur erläutert. Hierbei sind wiederum die elektrische Ausgabeleistung der Gasturbinenanlage als durchgezogene Linie und die Turbinenleistung der Gasturbine als gestrichelte Linie über der Umgebungstemperatur T aufgetragen. Das Verhalten oberhalb der Umgebungstemperatur T₀ entspricht dem der Figur 3, so dass eine Wiederholung der obigen Erläuterungen unterbleiben kann. Unterhalb der Umgebungstemperatur T₀ wird die Gasturbine nun jedoch so geregelt, dass der Leistungsgrenzwert in Abhängigkeit von den herrschenden Betriebsbedingungen bestimmt wird. Ziel ist es hierbei, die Turbinenleistung als Regelgröße an ihrem maximal zulässigen Wert zu halten. Dies führt jedoch dazu, dass bei sinkenden Umgebungstemperaturen mit einer abnehmenden Verdichterleistung der gewünschte Massenstrom der Verdichterluft bereitgestellt werden kann, so dass ein entsprechend höherer Anteil der Turbinenleistung an den elektrischen Generator abgegeben werden kann. Folge hiervon ist eine entsprechende Erhöhung der elektrischen Ausgabeleistung der Gasturbinenanlage. Das wirtschaftliche Potential der Erfindung lässt sich an der schraffierten Fläche A in Figur 4 ablesen. Während sich die Figuren 3 und 4 auf die Umgebungstemperatur beziehen, können entsprechende Aussagen im Sinne der vorliegenden Erfindung für den Luftdruck gemacht werden, wobei allerdings die Wirkung eines steigenden Luftdrucks mit jener einer abnehmenden Umgebungstemperatur und die eines sinkenden Luftdrucks mit jener einer zunehmenden Umgebungstemperatur zu vergleichen sind.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Ein Verfahren zum Betreiben einer Gasturbinenanlage (1) mit einer Gasturbine (100) und einem von der Gasturbine (100) angetriebenen elektrischen Generator (200), das Verfahren wenigstens die folgenden Schritte aufweisend:
- Erfassen einer Momentanleistung der Gasturbinenanlage (1) ;
- Vergleichen der erfassten Momentanleistung mit einem Leistungsgrenzwert; und
- Begrenzen der Momentanleistung, wenn das Vergleichen ergibt, dass die erfasste Momentanleistung den Leistungsgrenzwert erreicht oder überschreitet,
mit einem Schritt des Erfassens wenigstens eines Betriebsparameters der Gasturbinenanlage (1) und einem Schritt des Bestimmens des Leistungsgrenzwertes in Abhängigkeit des wenigstens einen erfassten Betriebsparameters,
**dadurch gekennzeichnet, dass**
der wenigstens eine Betriebsparameter der Gasturbinenanlage (1) einen Umgebungsdruck umfasst und der Leistungsgrenzwert erhöht wird, wenn sich der Umgebungsdruck erhöht.

2. Das Verfahren des vorhergehenden Anspruchs, bei dem der wenigstens eine Betriebsparameter der Gasturbinenanlage (1) weiterhin einen ausgewählten Betriebsparameter von einer Umgebungstemperatur, einer Gesamtlaufzeit der Gasturbine (100) oder einer Gesamtenergieausgabe der Gasturbinenanlage (1) umfasst.

3. Das Verfahren des vorhergehenden Anspruchs 2, bei dem der Leistungsgrenzwert erhöht wird, wenn sich die Umgebungstemperatur verringert.

4. Das Verfahren von einem der Ansprüche 2 bis 3, bei dem der Leistungsgrenzwert verringert wird, wenn die Gesamtlaufzeit der Gasturbine (100) einen vorherbestimmten Schwellwert überschreitet.

5. Das Verfahren von einem der vorhergehenden Ansprüche, bei dem die Momentanleistung der Gasturbinenanlage (1) bestimmt wird, indem eine elektrische Ausgabeleistung des elektrischen Generators (200) der Gasturbinenanlage (1) bestimmt wird.

6. Das Verfahren von einem der Ansprüche 1 bis 4, bei dem die Momentanleistung der Gasturbinenanlage (1) bestimmt wird, indem eine momentane Turbinenleistung der Gasturbine (100) der Gasturbinenanlage (1) bestimmt wird.

7. Das Verfahren von einem der vorhergehenden Ansprüche, bei dem die Momentanleistung begrenzt wird, indem ein Verdichtermassenstrom eines Verdichters (105) der Gasturbine (100) begrenzt wird.

8. Eine Gasturbinenanlage (1) mit einer Gasturbine (100), einem mit der Gasturbine (100) verbundenen elektrischen Generator (200) und einer mit der Gasturbine (100) und dem elektrischen Generator (200) verbundenen Steuereinheit, die ausgebildet ist, das Verfahren eines der vorhergehenden Ansprüche auszuführen.

9. Ein computerlesbarer Datenträger mit einem computerausführbaren Programmcode, der, von einer Steuereinheit einer Gasturbinenanlage (1) gemäß dem vorhergehenden Anspruch ausgeführt, das Verfahren gemäß einem der Ansprüche 1 bis 7 ausführt.

## Claims

1. A method for operating a gas turbine plant (1) having a gas turbine (100) and an electric generator (200) driven by the gas turbine (100), the method having at least the following steps:
- detecting an instantaneous power of the gas turbine plant (1);
- comparing the detected instantaneous power with a power limit value; and
- limiting the instantaneous power when the result of the comparison is that the detected instantaneous power is equal to or greater than the power limit value,
having a step for detecting at least one operating parameter of the gas turbine plant (1) and a step of determining the power limit value as a function of the at least one detected operating parameter,
**characterized in that**
the at least one operating parameter of the gas turbine plant (1) comprises an ambient pressure and the power limit value is increased when the ambient pressure increases.

2. The method of the preceding claim, in which the at least one operating parameter of the gas turbine plant (1) further comprises a selected operating parameter from an ambient temperature, a total running time of the gas turbine (100) or a total energy output from the gas turbine plant (1).

3. The method of the preceding Claim 2, in which the power limit value is increased when the ambient temperature decreases.

4. The method of either of Claims 2 and 3, in which the power limit value is reduced when the total running time of the gas turbine (100) exceeds a previously determined threshold value.

5. The method of one of the preceding claims, in which the instantaneous power of the gas turbine plant (1) is determined by an electrical output of the electric generator (200) of the gas turbine plant (1) being determined.

6. The method of one of Claims 1 to 4, in which the instantaneous power of the gas turbine plant (1) is determined by an instantaneous turbine power of the gas turbine (100) of the gas turbine plant (1) being determined.

7. The method of one of the preceding claims, in which the instantaneous power is limited by a compressor mass flow of a compressor (105) of the gas turbine (100) being limited.

8. A gas turbine plant (1) having a gas turbine (100), an electric generator (200) connected to the gas turbine (100) and a control unit which is connected to the gas turbine (100) and the electric generator (200) and which is designed to carry out the method of one of the preceding claims.

9. A computer-readable data carrier having computer-executable program code which, executed by a control unit of a gas turbine plant (1) according to the preceding claim, carries out the method according to one of Claims 1 to 7.

## Revendications

1. Procédé pour faire fonctionner une installation (1) de turbine à gaz comprenant une turbine (100) à gaz et une génératrice (200) électrique entraînée par la turbine (100) à gaz, le procédé ayant au moins les stades suivants :
- détection d'une puissance instantanée de l'installation (1) de turbine à gaz;
- comparaison de la puissance instantanée détectée à une valeur limite de puissance; et
- limitation de la puissance instantanée, si la comparaison indique que la puissance instantanée détectée atteint ou dépasse la valeur limite de puissance,
comprenant un stade de détection d'au moins un paramètre de fonctionnement de l'installation (1) de turbine à gaz et un stade de détermination de la valeur limite de puissance en fonction du au moins un paramètre de fonctionnement détecté,
**caractérisé en ce que**
le au moins un paramètre de fonctionnement de l'installation (1) de turbine à gaz comprend une pression de l'atmosphère ambiante et on augmente la valeur limite de la puissance, si la pression de l'atmosphère ambiante augmente.

2. Procédé suivant la revendication précédente, dans lequel le au moins un paramètre de fonctionnement de l'installation (1) de turbine à gaz comprend en outre un paramètre de fonctionnement sélectionné parmi une température de l'atmosphère ambiante, un temps de marche total de la turbine (100) à gaz ou une production totale d'énergie de l'installation (1) de turbine à gaz.

3. Procédé suivant la revendication précédente 2, dans lequel on augmente la valeur limite de la puissance, si la température de l'atmosphère ambiante s'abaisse.

4. Procédé suivant l'une des revendications 2 à 3, dans lequel on diminue la valeur limite de la puissance, si le temps de marche totale de la turbine (100) à gaz dépasse une valeur de seuil définie à l'avance.

5. Procédé suivant l'une des revendications précédentes, dans lequel on définie la puissance instantanée de l'installation (1) de turbine à gaz en déterminant une puissance électrique de sortie de la génératrice (200) électrique de l'installation (1) de la turbine à gaz.

6. Procédé suivant l'une des revendications 1 à 4, dans lequel on détermine la puissance instantanée de l'installation (1) de turbine à gaz en déterminant la puissance instantanée de la turbine (100) à gaz de l'installation (1) de turbine à gaz.

7. Procédé suivant l'une des revendications précédentes, dans lequel on limite la puissance instantanée en limitant le courant massique d'un compresseur (105) de la turbine (100) à gaz.

8. Installation (1) de turbine à gaz, comprenant une turbine (100) à gaz, une génératrice (200) électrique reliée à la turbine (100) à gaz et une unité de commande reliée à la turbine (100) à gaz et à la génératrice (200) électrique, est constituée pour effectuer le procédé de l'une des revendications précédentes.

9. Support de données déchiffrables par ordinateur comprenant un code de programme pouvant être exécuté par un ordinateur, qui, réalisé par une unité de commande des installations (1) de turbine à gaz suivant la revendication précédente, effectue le procédé suivant l'une des revendications 1 à 7.
